# FASCICULE DE BREVET EUROPEEN

(11) **EP 3 480 526 B1**
(45) Date de publication et mention de la délivrance du brevet: **18.03.2020**
(21) Numéro de dépôt: 18204408.1
(22) Date de dépôt: 05.11.2018
(51) Int. Cl.: F24D 15/04, F24D 19/00, F25B 47/02, F24F 11/42, F25B 30/02

(54) **INSTALLATION DE CHAUFFAGE ET/OU DE PRODUCTION D'EAU CHAUDE SANITAIRE DANS UN BÂTIMENT**
HEIZ- UND/ODER WARMWASSERERZEUGUNGSANLAGE FÜR DEN SANITÄRBEREICH IN EINEM GEBÄUDE
INSTALLATION FOR HEATING AND/OR FOR PRODUCING DOMESTIC HOT WATER IN A BUILDING

(30) Priorité: 07.11.2017 FR 1760413
(43) Date de publication de la demande: 08.05.2019
(73) Titulaire: Electricité de France, 75008 Paris (FR)
(72) Inventeur: RADULESCU, Mihai, 77250 ECUELLES (FR); CHIODI, Frédéric, 77430 CHAMPAGNE SUR SEINE (FR)
(74) Mandataire: Regimbeau

(56) Documents cités:
- EP-A2- 2 532 983
- WO-A1-2010/013503
- US-B1- 6 318 095

## Description

### DOMAINE TECHNIQUE GENERAL

La présente invention concerne une installation de chauffage et/ou de production d'eau chaude sanitaire dans un bâtiment, cette installation comprenant une pompe à chaleur.

### ETAT DE L'ART

On connaît déjà d'après l'état de la technique des installations telles que précitées. Pour mémoire, on rappellera qu'une pompe à chaleur comprend généralement un circuit de fluide frigorigène, sur lequel sont montés successivement en série : un premier échangeur air/fluide frigorigène, un compresseur, un deuxième échangeur fluide frigorigène/liquide technique et un détendeur.

Dans les installations existantes, le premier échangeur est à l'extérieur du bâtiment, tandis que le deuxième est placé à l'intérieur de celui-ci. Le circuit de fluide frigorigène, qui se présente sous la forme d'une canalisation en boucle, traverse donc le mur du bâtiment, afin de raccorder ces deux échangeurs. Par ailleurs, un circuit de liquide technique, dit "circuit primaire" se trouve à l'intérieur du bâtiment et passe au travers du deuxième échangeur, afin de réaliser un échange thermique avec le fluide frigorigène.

Si ce type de pompe à chaleur présente de bonnes performances en termes d'échanges thermiques, il reste toutefois d'un coût global élevé, notamment pour les raisons suivantes :
- comme le circuit de fluide frigorigène passe à l'intérieur du bâtiment, ce type d'installation doit obligatoirement être mise en place dans le bâtiment par un installateur agréé ayant reçu une formation de frigoriste ;
- le fluide frigorigène utilisé ne doit pas être inflammable, pour éviter tout risque d'incendie en cas de fuite, alors que les fluides frigorigènes inflammables, tels que le propane, sont plus performants en termes d'échanges thermiques et sont plus écologiques.

Afin de contrer les inconvénients précités, il a été envisagé de placer la pompe à chaleur et ses constituants intégralement à l'extérieur du bâtiment. On parle alors de "pompe à chaleur extérieure monobloc".

Toutefois, dans ce cas, il est nécessaire qu'une partie de la canalisation du circuit primaire se trouve à l'extérieur du bâtiment pour effectuer les échanges de chaleur avec le deuxième échangeur de chaleur de la pompe à chaleur qui se trouve à l'extérieur du bâtiment.

Le liquide technique circulant dans le circuit primaire est généralement de l'eau.

Or, en cas de températures extérieures négatives et d'arrêt de la pompe à chaleur, soit par ce qu'une température suffisante a été atteinte à l'intérieur du bâtiment, soit à la suite d'une coupure de courant, la température de l'eau se trouvant dans la portion du circuit primaire se trouvant à l'extérieur du bâtiment, peut diminuer fortement jusqu'à geler. Ceci peut provoquer l'éclatement des canalisations et autres organes de la pompe à chaleur, tels que la pompe de circulation, des vannes, des raccords, voire même les échangeurs eux-mêmes, etc. Ce risque de gel limite donc l'utilisation de ce type de pompe à chaleur.

Afin d'éviter les problèmes précités, il a été proposé par exemple d'entourer la portion du circuit primaire se trouvant à l'extérieur du bâtiment, par un cordon chauffant électrique. Il est également possible de mettre en circulation, à intervalles réguliers, l'eau se trouvant dans le circuit primaire, afin d'éviter sa prise en glace. Toutefois, ces protections ne fonctionnent que si la pompe à chaleur ou le cordon électrique sont toujours alimentés en électricité. En cas de coupure prolongée de l'alimentation électrique, il n'y a alors plus aucune protection, et en peu de temps le circuit primaire de la pompe à chaleur est détérioré. Une installation de chauffage et/ou de production d'eau chaude sanitaire selon le préambule de la revendication 1 est connue du document EP 2 532 983 A2.

### PRESENTATION DE L'INVENTION

L'invention a pour but de fournir une installation de chauffage et/ou de production d'eau chaude sanitaire dans un bâtiment, munie d'une pompe à chaleur extérieure monobloc, c'est à dire dont le circuit de fluide frigorigène est entièrement situé à l'extérieur du bâtiment et qui permette de garder hors-gel ses canalisations de liquide technique (eau) se trouvant hors du bâtiment.

De façon avantageuse, cette mise hors gel doit également pouvoir se faire sans utiliser d'alimentation électrique.

A cet effet, l'invention concerne une installation de chauffage et/ou de production d'eau chaude sanitaire dans un bâtiment, cette installation étant munie d'un circuit primaire à l'intérieur duquel circule un liquide technique, tel que de l'eau, et d'une pompe à chaleur, cette dernière comprenant un circuit de fluide frigorigène sur lequel sont montés en série, un premier échangeur de chaleur air/fluide frigorigène, un compresseur, un deuxième échangeur de chaleur fluide frigorigène/liquide technique et un détendeur et cette pompe à chaleur étant disposée à l'extérieur du bâtiment de sorte que son circuit de fluide frigorigène se trouve entièrement à l'extérieur du bâtiment, ledit circuit primaire traversant ledit deuxième échangeur de chaleur, un troisième échangeur de chaleur liquide technique/milieu à réchauffer et un circulateur, placés à l'intérieur du bâtiment, étant montés sur ce circuit primaire.

Conformément à l'invention, ce circuit primaire comprend un module hors-gel, placé à l'intérieur du bâtiment et qui comprend un quatrième échangeur de chaleur liquide technique/air et une vanne trois voies, cette dernière étant disposée de façon que sa première voie soit raccordée à la sortie du troisième échangeur, que sa deuxième voie soit raccordée à un point de piquage sur la canalisation du circuit primaire reliant ledit deuxième échangeur audit troisième échangeur et que sa troisième voie soit raccordée au point le plus haut dudit quatrième échangeur, ledit quatrième échangeur est disposé plus bas que ledit deuxième échangeur, et ladite vanne à trois voies peut occuper soit une première position, dite "de chauffage", dans laquelle sa première voie communique exclusivement avec sa troisième voie, de façon à diriger le liquide technique provenant du deuxième échangeur vers le troisième échangeur et à chauffer ledit milieu à réchauffer, soit une deuxième position, dite "hors gel", dans laquelle sa deuxième voie communique exclusivement avec sa troisième voie, de sorte que le liquide technique ne circule plus dans le troisième échangeur, mais qu'il circule en boucle, par circulation naturelle, du point le plus haut du quatrième échangeur vers ledit deuxième échangeur puis dudit deuxième échangeur vers le point le plus bas du quatrième échangeur.

Grâce à ces caractéristiques de l'invention, la circulation naturelle qui se met en place dans le circuit primaire en mode "hors gel", permet de faire circuler le liquide technique qui s'est réchauffé à l'intérieur du bâtiment, vers le deuxième échangeur de la pompe à chaleur et d'éviter ainsi tout risque de gel de celui-ci.

Selon d'autres caractéristiques avantageuses et non limitatives de l'invention, prises seules ou en combinaison :
- ledit quatrième échangeur de chaleur est un échangeur vertical, de préférence un échangeur tube à ailettes ;
- ledit circulateur est disposé entre ledit quatrième échangeur et ledit deuxième échangeur ;
- ledit circulateur est disposé entre ledit deuxième échangeur et ledit troisième échangeur ;
- ledit module hors-gel est entouré d'un carter perforé, muni d'au moins une ouverture haute et d'au moins une ouverture basse, qui permettent la circulation d'air dans ledit carter, autour du quatrième échangeur de chaleur, de façon à réaliser l'échange de chaleur avec le liquide technique ;
   - ladite vanne trois voies est conçue de sorte qu'en cas d'interruption de son alimentation électrique, elle passe automatiquement dans sa position "hors gel" ;
   - ledit deuxième échangeur est entouré d'une enveloppe d'un matériau thermiquement isolant ;
   - ledit milieu à réchauffer est soit de l'air se trouvant à l'intérieur du bâtiment, soit de l'eau chaude sanitaire, soit de l'eau d'un réseau de chauffage ;
   - la pompe à chaleur, la vanne à trois voies et le circulateur sont pilotés par une unité centrale.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
- la figure 1 est une vue schématique d'un mode de réalisation de l'installation conforme à l'invention,
- les figures 2 et 3 sont des vues de détail du module hors-gel de cette installation, respectivement en mode "chauffage" et en mode "hors-gel", et
- les figures 4 et 5 sont des vues partielles de l'installation de la figure 1, représentant respectivement une deuxième et une troisième variante de réalisation de celle-ci.

### DESCRIPTION DETAILLEE

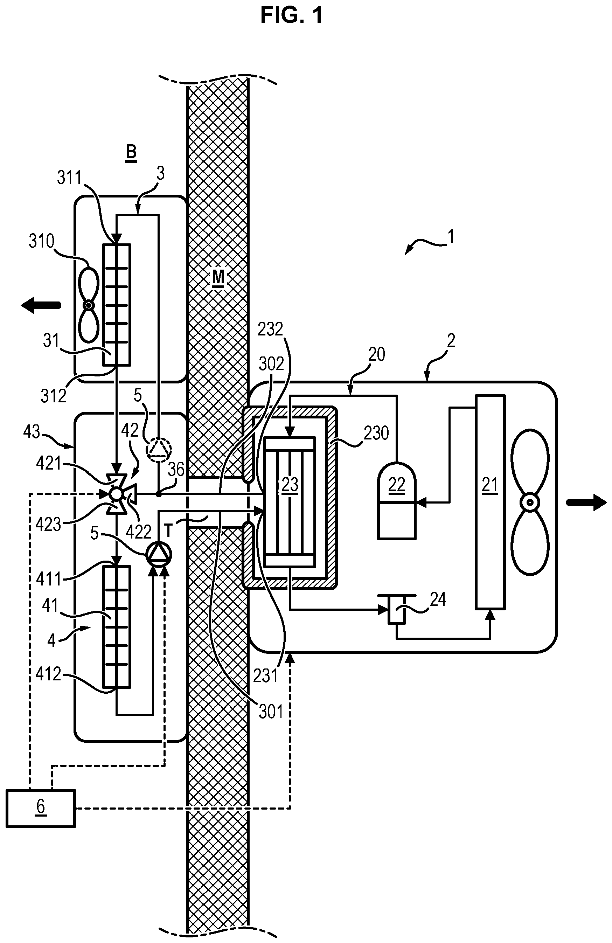

En se reportant à la figure 1, on peut voir une installation 1 permettant le chauffage et/ou la production d'eau chaude sanitaire dans un bâtiment B, dont seul un mur M est représenté, ce mur séparant l'intérieur du bâtiment situé à gauche sur la figure 1 de l'extérieur, situé à droite sur cette même figure.

L'installation 1 comprend tout d'abord une pompe à chaleur 2. De façon classique, celle-ci comprend un circuit de fluide frigorigène 20, sous forme d'une canalisation en boucle, sur lequel sont montés successivement en série : un premier échangeur 21 air/fluide frigorigène, un compresseur 22, un deuxième échangeur 23 fluide frigorigène/liquide technique (par exemple du type échangeur à plaques) et enfin un détendeur 24.

Conformément à l'invention, cette pompe à chaleur 2 est disposée entièrement à l'extérieur du bâtiment B, de sorte que son circuit 20 de fluide frigorigène se trouve intégralement à l'extérieur de ce bâtiment.

Le premier échangeur thermique 21 réalise un échange thermique (c'est-à-dire un échange de calories) entre le fluide frigorigène et l'air extérieur du bâtiment.

Le deuxième échangeur thermique 23 réalise quant à lui un échange thermique entre le fluide frigorigène présent dans le circuit 20 et un liquide technique, généralement de l'eau, qui circule dans un circuit, dit "primaire", 3. Ce circuit primaire 3 est une canalisation fermée en boucle.

De façon avantageuse, le deuxième échangeur thermique 23 est isolé thermiquement. Il est par exemple entouré d'une couche 230 d'un matériau isolant thermique.

Un troisième échangeur thermique 31 liquide technique/milieu à réchauffer est monté sur le circuit primaire 3. Ce troisième échangeur 31 est monté en aval du deuxième échangeur 23, par rapport au sens de circulation du liquide technique dans le circuit 3. Il permet de réaliser un échange thermique entre le liquide technique, tel que de l'eau, qui a été réchauffé dans le deuxième échangeur 23 et le milieu à réchauffer qui se trouve dans le bâtiment B.

Selon un premier mode de réalisation, ce milieu à réchauffer est de l'air. Cet air circule autour de l'échangeur 31, qui est par exemple un échangeur tube à ailettes, et il est propulsé à l'intérieur du bâtiment B, par exemple par un ventilateur 310.

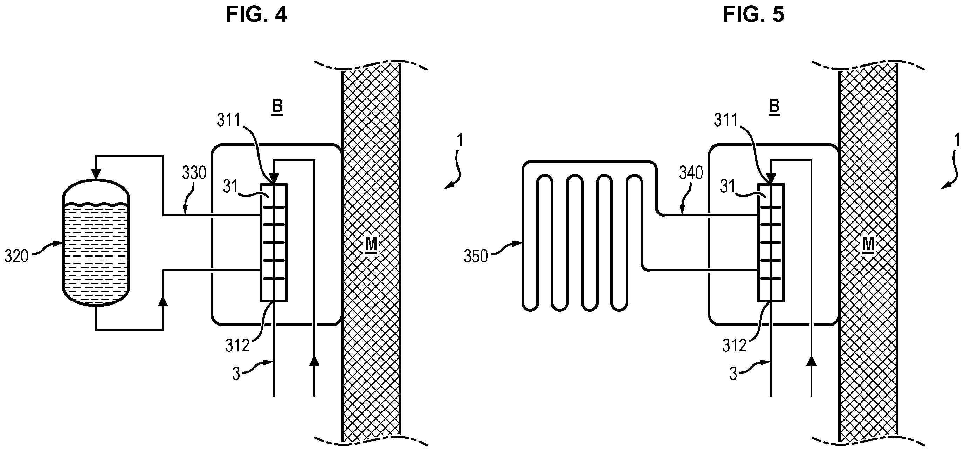

Selon un deuxième mode de réalisation, représenté sur la figure 4, le milieu à réchauffer est de l'eau sanitaire stockée dans un ballon d'eau chaude 320 et qui peut circuler dans un circuit en boucle 330, reliant ce ballon au troisième échangeur 31 et inversement.

Selon un troisième mode de réalisation, représenté sur la figure 5, le milieu à réchauffer est de l'eau de chauffage (impropre à la consommation). Cette eau circule alors dans un circuit en boucle 340 qui traverse le troisième échangeur 31 et qui vient alimenter un réseau de planchers chauffants ou de radiateurs 350, par exemple.

Conformément à l'invention, l'installation 1 comprend également un module hors-gel 4, placé à l'intérieur du bâtiment B. Ce module hors-gel 4 est inséré sur le circuit primaire 3.

Le module hors-gel 4 comprend un quatrième échangeur thermique 41 liquide technique/air et une vanne à trois voies 42.

La vanne à trois voies 42 comprend une première voie 421, une deuxième voie 422, et une troisième voie 423.

Cette vanne à trois voies 42 est montée sur le circuit 3, de façon que sa première voie 421 soit raccordée à la sortie 312 du troisième échangeur 31, et que sa deuxième voie 422 soit raccordée à un point de piquage 36 situé sur la partie de canalisation du circuit primaire 3 reliant le deuxième échangeur thermique 23 à l'entrée 311 du troisième échangeur thermique 31. Enfin, sa troisième voie 423 est raccordée au point le plus haut 411 du quatrième échangeur 41.

De façon avantageuse, mais non obligatoire, le module hors-gel 4 est logé à l'intérieur d'un carter 43, qui sera décrit plus en détails ultérieurement et qui a surtout pour fonction de cacher la vanne 42 et l'échangeur 41 à la vue.

Enfin, l'installation 1 comprend également un circulateur 5 dont le rôle est de faire circuler le liquide technique (par exemple de l'eau) à l'intérieur du circuit 3.

Ce circulateur 5 peut être positionné, soit entre le quatrième échangeur 41 et le deuxième échangeur 23, comme représenté en traits pleins sur la figure 1, entre le point de piquage 36 et le troisième échangeur 31, comme représenté en pointillés sur la figure 1.

De préférence, le circulateur 5 est également logé à l'intérieur du carter 43, lorsque ce dernier est présent.

Le circulateur 5 est une pompe qui permet de faire circuler le liquide technique à l'intérieur du circuit 3, mais qui présente la particularité de ne pas être totalement étanche, de sorte que lorsqu'il est à l'arrêt le liquide technique peut le traverser dans un sens comme dans l'autre.

Conformément à l'invention, le quatrième échangeur thermique 41 est disposé à une altitude inférieure à celle du deuxième échangeur 23. En d'autres termes, le point le plus bas 412 du quatrième échangeur 41 est situé à une altitude inférieure au point le plus bas du deuxième échangeur 23.

De préférence, l'échangeur 41 est un échangeur vertical, par exemple un tube à ailettes.

De préférence, la pompe à chaleur 2, le circulateur 5 et la vanne à trois voies 42 sont pilotés par une unité centrale 6.

De préférence également, la vanne à trois voies 42 est conformée de façon à raccorder automatiquement la deuxième voie 422 à la troisième voie 423 en cas d'interruption d'alimentation électrique. Un ressort ou autre dispositif mécanique par exemple peut permettre de ramener la vanne dans cette position par défaut.

De façon avantageuse, on peut asservir le fonctionnement de la vanne à trois voies 42 à une valeur seuil donnée par une sonde de température extérieure. Ainsi, lorsque la température extérieure devient inférieure à cette valeur seuil (par exemple de 5°C), la vanne 42 raccorde le deuxième échangeur 23 directement au quatrième échangeur 41 et le mode "hors gel" s'enclenche. Inversement au-dessus de cette valeur seuil, la vanne 42 reste en mode "chauffage", même si la pompe à chaleur 2 ne fonctionne pas.

Dans tous les cas, en cas de coupure de l'alimentation électrique, la vanne 42 passe automatiquement en mode "hors gel".

Les canalisations du circuit 3 s'étendent principalement à l'intérieur du bâtiment B, sauf celles qui traversent le mur M pour aller circuler dans le deuxième échangeur 23. Le mur M est donc percé d'un trou T permettant le passage des canalisations aller 301 et retour 302 de cette portion du circuit primaire 3.

De façon avantageuse, le trou T présente un petit diamètre, par exemple de 5 à 10 cm, pour le passage des canalisations 301, 302 isolées.

De préférence, la pompe à chaleur 2 est installée le plus proche possible du mur M du bâtiment B, de façon à limiter la longueur des canalisations du circuit primaire 3 qui doivent circuler à l'extérieur du bâtiment B. Dans le meilleur des cas, cette pompe à chaleur 2 est accolée au mur M du bâtiment.

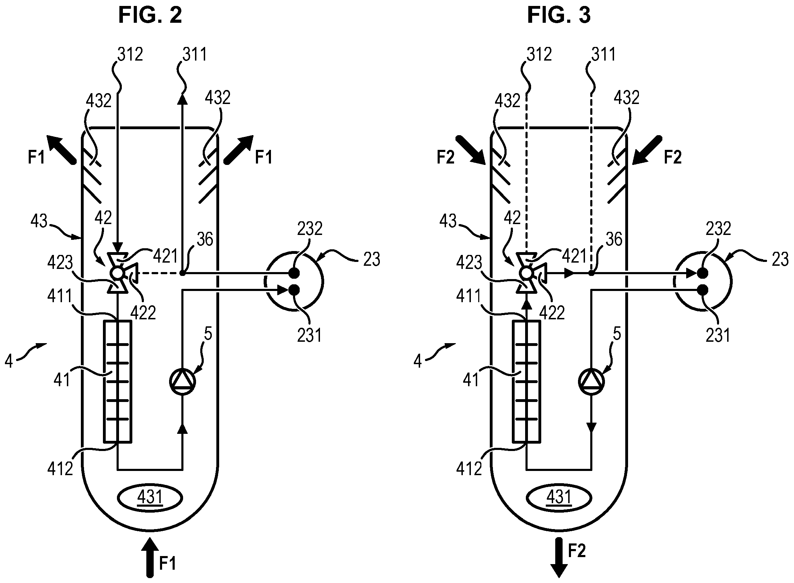

Comme représenté sur les figures 2 et 3, le carter 43 présente avantageusement une ou plusieurs ouverture(s) 431 dans sa partie basse et une ou plusieurs ouverture(s) 432 dans sa partie haute.

L'installation 1 conforme à l'invention peut fonctionner selon deux modes, à savoir le mode « chauffage » (figures 1 et 2) ou le mode « hors-gel » (figures 1 et 3). Nous décrirons successivement ces deux modes ci-dessous.

### Fonctionnement en mode "chauffage".

Dans ce cas, la pompe à chaleur 2 est actionnée de façon à fonctionner et que le fluide frigorigène circule à l'intérieur du circuit 20. Le fluide frigorigène, comprimé à l'intérieur du compresseur 22, s'écoule au travers du deuxième échangeur 23 en libérant les calories qu'il a accumulées précédemment et les échange avec le liquide technique circulant dans le circuit primaire 3. Le fluide frigorigène ainsi refroidi, passe ensuite dans le détendeur 24 où il retourne à une pression et température inférieures, puis traverse le premier échangeur thermique 21 où il est de nouveau réchauffé par les calories récupérées de l'air extérieur. Ce fluide réchauffé retourne ensuite au compresseur 22.

Le premier échangeur 21 fonctionne donc comme un évaporateur, tandis que le deuxième échangeur 23 fonctionne comme un condenseur.

Par ailleurs, le liquide technique, ici de préférence l'eau, en sortant du deuxième échangeur thermique 23 est réchauffé, et la vanne à trois voies 42 est pilotée de façon à diriger le liquide technique vers l'entrée 311 du troisième échangeur thermique 31. Cet état est représenté sur la figure 2.

La partie de canalisation du circuit primaire 3 à l'intérieur de laquelle le liquide technique ne circule plus est représentée en pointillés.

Le liquide technique sortant de la sortie 312 du troisième échangeur 31 est dirigé par la vanne à trois voies 42 vers le point le plus haut 411 du quatrième échangeur 41.

Le liquide technique sortant du troisième échangeur 31 s'est refroidi dans celui-ci, toutefois il conserve encore des calories qu'il peut échanger avec l'air se trouvant autour du quatrième échangeur 41.

En conséquence, à l'intérieur du carter 43, l'air entrant par la ou les ouverture(s) basse(s) 431 est réchauffé et circule vers le haut pour s'échapper par les ouvertures hautes 432 et être diffusé à l'intérieur du bâtiment, (flèches F1, phénomène de convexion). Il peut ainsi assurer un complément de chauffage.

Le liquide technique est ensuite entraîné par le circulateur 5 de façon à retourner vers le deuxième échangeur thermique 23.

### Fonctionnement en mode "hors-gel"

En mode "hors-gel", la vanne à trois voies 42 est actionnée de façon à shunter la partie du circuit 3 qui traverse le troisième échangeur thermique 31. Cette situation est représentée sur la figure 3.

Les parties de canalisation du circuit primaire 3 à l'intérieur desquelles le liquide technique ne circule plus sont représentées en pointillés.

En mode "hors-gel", la pompe à chaleur 2 et le circulateur 5 sont à l'arrêt, que cet arrêt résulte par exemple du fait qu'une consigne de température a été atteinte à l'intérieur du bâtiment B ou d'une interruption de l'alimentation électrique.

Dans ce cas, le liquide technique du circuit primaire 3 se trouvant dans le deuxième échangeur thermique 23 risque de geler.

L'air présent à l'intérieur du bâtiment B pénètre par les ouvertures hautes 432 du carter 43 pour en ressortir par l'ouverture basse 431 (flèches F2, phénomène de convexion). L'air circulant dans le module se refroidit car il échange des calories avec le liquide technique circulant naturellement dans le quatrième échangeur 41. Ce liquide (eau) se trouve ainsi réchauffé.

Un phénomène de circulation naturelle (thermosiphon) se met alors en place à l'intérieur du quatrième échangeur 41. Le liquide technique chaud monte dans cet échangeur 41, traverse la vanne à trois voies 42 et se dirige vers le deuxième échangeur 23 situé à une altitude supérieure.

Dans le même temps, la température du liquide technique se trouvant dans le deuxième échangeur thermique 23 situé à l'extérieur est constamment en baisse puisqu'il aura tendance à perdre des calories vers l'extérieur malgré l'isolation thermique 230. De façon similaire, par circulation naturelle (thermosiphon), l'eau froide sortant du deuxième échangeur 23 tend à retourner vers le point le plus bas du circuit, au travers du circulateur 5 et vers le quatrième échangeur 41.

On notera que la vitesse de cette circulation naturelle à l'intérieur du circuit primaire 3 dépend de la différence de température entre le deuxième échangeur et le quatrième échangeur. Plus cette différence est élevée, et plus la circulation naturelle sera rapide et donc plus les calories seront apportées au deuxième échangeur thermique 23 en évitant à l'eau se trouvant dans celui-ci de geler.

L'installation conforme à l'invention présente donc un certain nombre d'avantages.

Le circuit 20 de fluide frigorigène se trouve entièrement à l'intérieur de la pompe à chaleur. Tout ce fluide est donc scellé dans la pompe à chaleur dès sa fabrication et on limite ainsi les risques de fuite lors de l'installation sur site. On réduit également la quantité de fluide frigorigène utilisée.

Le fluide frigorigène est entièrement à l'extérieur de la maison, ce qui permet d'utiliser un fluide inflammable tout en respectant les normes de sécurité. Les fluides inflammables sont plus performants en termes d'échanges thermiques et sont plus écologiques, car ils présentent un coefficient de Potentiel de Réchauffement Global PRG (ou *Global Warming Potential* GWP), représentatif de la nocivité d'un gaz à effet de serre bien plus faible que celui des fluides frigorigène classiques, non inflammable.

L'installation de ce type de pompe à chaleur est plus rapide, plus simple et moins cher que les pompes à chaleur de type "split", c'est-à-dire scindées, dans lesquelles le circuit de fluide frigorigène rentre en partie à l'intérieur du bâtiment. La mise en place du circuit primaire 3 à basse pression (environ 1 bar=10⁵ Pa) peut être faite par un plombier qui n'a pas besoin d'avoir une formation de frigoriste et sans utiliser un équipement spécifique pour le circuit de fluide frigorigène sous haute pression, puisque le plombier n'a pas besoin d'intervenir sur la pompe à chaleur.

Le trou T à percer dans le mur de la maison est de petit diamètre, uniquement pour faire passer les canalisations 301 et 302. La pompe à chaleur 2 est donc adaptée à la rénovation des maisons existantes.

## Revendications

1. Installation (1) de chauffage et/ou de production d'eau chaude sanitaire dans un bâtiment, cette installation étant munie d'un circuit primaire (3) à l'intérieur duquel circule un liquide technique, tel que de l'eau, et d'une pompe à chaleur (2), cette dernière comprenant un circuit de fluide frigorigène (20) sur lequel sont montés en série, un premier échangeur de chaleur air/fluide frigorigène (21), un compresseur (22), un deuxième échangeur de chaleur fluide frigorigène/liquide technique (23) et un détendeur (24) et cette pompe à chaleur (2) étant disposée à l'extérieur du bâtiment de sorte que son circuit de fluide frigorigène (20) se trouve entièrement à l'extérieur du bâtiment, ledit circuit primaire (3) traversant ledit deuxième échangeur de chaleur (23), un troisième échangeur de chaleur liquide technique/milieu à réchauffer (31) et un circulateur (5), placés à l'intérieur du bâtiment, étant montés sur ce circuit primaire,
cette installation étant **caractérisée en ce que** ledit circuit primaire (3) comprend un module hors-gel (4), placé à l'intérieur du bâtiment et qui comprend un quatrième échangeur de chaleur liquide technique/air (41) et une vanne trois voies (42), cette dernière étant disposée de façon que sa première voie (421) soit raccordée à la sortie (312) du troisième échangeur, que sa deuxième voie (422) soit raccordée à un point de piquage (36) sur la canalisation du circuit primaire reliant ledit deuxième échangeur (23) audit troisième échangeur (31) et que sa troisième voie (423) soit raccordée au point le plus haut (411) dudit quatrième échangeur (41), **en ce que** ledit quatrième échangeur (41) est disposé plus bas que ledit deuxième échangeur (23), et **en ce que** ladite vanne à trois voies (42) peut occuper soit une première position, dite "de chauffage", dans laquelle sa première voie (421) communique exclusivement avec sa troisième voie (423), de façon à diriger le liquide technique provenant du deuxième échangeur (23) vers le troisième échangeur (31) et à chauffer ledit milieu à réchauffer, soit une deuxième position, dite "hors gel", dans laquelle sa deuxième voie (422) communique exclusivement avec sa troisième voie (423), de sorte que le liquide technique ne circule plus dans le troisième échangeur (31), mais qu'il circule en boucle, par circulation naturelle, du point le plus haut (411) du quatrième échangeur (41) vers ledit deuxième échangeur (23) puis dudit deuxième échangeur (23) vers le point le plus bas (412) du quatrième échangeur.

2. Installation selon la revendication 1, **caractérisée** en ce ledit quatrième échangeur de chaleur (41) est un échangeur vertical, de préférence un échangeur tube à ailettes.

3. Installation selon la revendication 1 ou 2, **caractérisée en ce que** ledit circulateur (5) est disposé entre ledit quatrième échangeur (41) et ledit deuxième échangeur (23).

4. Installation selon la revendication 1 ou 2, **caractérisée en ce que** ledit circulateur (5) est disposé entre ledit deuxième échangeur (23) et ledit troisième échangeur (31).

5. Installation selon l'une des revendications précédentes, **caractérisée en ce que** ledit module hors-gel (4) est entouré d'un carter perforé (43), muni d'au moins une ouverture haute (432) et d'au moins une ouverture basse (431), qui permettent la circulation d'air dans ledit carter, autour du quatrième échangeur de chaleur (41), de façon à réaliser l'échange de chaleur avec le liquide technique.

6. Installation selon l'une des revendications précédentes, **caractérisée en ce que** ladite vanne trois voies (42) est conçue de sorte qu'en cas d'interruption de son alimentation électrique, elle passe automatiquement dans sa position "hors gel".

7. Installation selon l'une des revendications précédentes, **caractérisée en ce que** ledit deuxième échangeur (23) est entouré d'une enveloppe (230) d'un matériau thermiquement isolant.

8. Installation selon l'une des revendications précédentes, **caractérisée en ce que** ledit milieu à réchauffer est soit de l'air se trouvant à l'intérieur du bâtiment, soit de l'eau chaude sanitaire, soit de l'eau d'un réseau de chauffage.

9. Installation selon l'une des revendications précédentes, **caractérisée en ce que** la pompe à chaleur (2), la vanne à trois voies (42) et le circulateur (5) sont pilotés par une unité centrale (6).

## Patentansprüche

1. Heiz- und/oder Warmwasser-Erzeugungsanlage (1) für den Sanitärbereich in einem Gebäude, wobei diese Anlage mit einem Primärkreislauf (3), in dessen Inneren eine technische Flüssigkeit, wie beispielsweise Wasser, umläuft, und mit einer Wärmepumpe (2) versehen ist, wobei diese letztere einen Kältemittelkreislauf (20) umfasst, an dem ein erster Luft/Kältemittel-Wärmetauscher (21), ein Verdichter (22), ein zweiter Wärmetauscher (23) zwischen Kältemittel und technischer Flüssigkeit, und ein Druckminderer (24) in Reihe montiert sind und diese Wärmepumpe (2) außerhalb des Gebäudes angeordnet ist, derart dass ihr Kältemittelkreislauf (20) sich vollständig außerhalb des Gebäudes befindet, wobei der Primärkreislauf (3) den zweiten Wärmetauscher (23), einen dritten Wärmetauscher (31) zwischen technischer Flüssigkeit und zu erwärmendem Medium, und eine Umlaufpumpe (5) durchquert, die im Inneren des Gebäudes platziert sind, die an diesem Primärkreislauf montiert sind,
wobei diese Anlage **dadurch gekennzeichnet ist, dass** der Primärkreislauf (3) ein Frostschutzmodul (4) umfasst, das im Inneren des Gebäudes platziert ist und das einen vierten Wärmetauscher (41) zwischen technischer Flüssigkeit und Luft, und ein Dreiwegeventil (42) umfasst, wobei dieses letztere derart angeordnet ist, dass sein erster Weg (421) an den Ausgang (312) des dritten Tauschers angeschlossen ist, dass sein zweiter Weg (422) an einen Anschlusspunkt (36) auf der Kanalisation des Primärkreislaufs angeschlossen ist, die den zweiten Tauscher (23) mit dem dritten Tauscher (31) verbindet, und dass sein dritter Weg (423) an den höchsten Punkt (411) des vierten Tauschers (41) angeschlossen ist, dadurch, dass der vierte Tauscher (41) niedriger als der zweite Tauscher (23) angeordnet ist, und dadurch, dass das Dreiwegeventil (42) entweder eine erste, eine sogenannte "Heiz"-Position, in der sein erster Weg (421) ausschließlich mit seinem dritten Weg (423) verbunden ist, derart dass die technische Flüssigkeit, die von dem zweiten Tauscher (23) stammt, hin zu dem dritten Tauscher (31) geleitet und das zu erwärmende Medium geheizt wird, oder eine zweite, eine sogenannte "Frostschutz"-Position einnehmen kann, in der ihr zweiter Weg (422) ausschließlich mit ihrem dritten Weg (423) verbunden ist, derart dass die technische Flüssigkeit nicht mehr in dem dritten Tauscher (31) umläuft, aber sie durch natürlichen Umlauf in einer Schleife vom höchsten Punkt (411) des vierten Tauschers (41) hin zum zweiten Tauscher (23), dann vom zweiten Tauscher (23) hin zum niedrigsten Punkt (412) des vierten Tausches umläuft.

2. Anlage nach Anspruch 1, **dadurch gekennzeichnet, dass** der vierte Wärmetauscher (41) ein vertikaler Tauscher, vorzugsweise ein Rippenrohrtauscher, ist.

3. Anlage nach Anspruch 1 oder 2, **dadurch gekennzeichnet, dass** die Umlaufpumpe (5) zwischen dem vierten Tauscher (41) und dem zweiten Tauscher (23) angeordnet ist.

4. Anlage nach Anspruch 1 oder 2, **dadurch gekennzeichnet, dass** die Umlaufpumpe (5) zwischen dem zweiten Tauscher (23) und dem dritten Tauscher (31) angeordnet ist.

5. Anlage nach einem der vorhergehenden Ansprüche, **dadurch gekennzeichnet, dass** das Frostschutzmodul (4) von einem perforierten Gehäuse (43) umgeben ist, das mit mindestens einer oberen Abdeckung (432) und mit mindestens einer unteren Abdeckung (431) versehen ist, die den Umlauf von Luft in dem Gehäuse um den vierten Wärmetauscher (41) herum ermöglichen, derart dass der Wärmeaustausch mit der technischen Flüssigkeit ausgeführt wird.

6. Anlage nach einem der vorhergehenden Ansprüche, **dadurch gekennzeichnet, dass** das Dreiwegeventil (42) derart gestaltet ist, dass es im Fall einer Unterbrechung ihrer Stromversorgung automatisch in ihre "Frostschutz"-Position übergeht.

7. Anlage nach einem der vorhergehenden Ansprüche, **dadurch gekennzeichnet, dass** der zweite Tauscher (23) von einer Hülle (230) aus einem thermisch isolierenden Material umgeben ist.

8. Anlage nach einem der vorhergehenden Ansprüche, **dadurch gekennzeichnet, dass** das zu erwärmende Medium entweder Luft, die sich im Inneren des Gebäudes befindet, oder Warmwasser für den Sanitärbereich oder Wasser eines Wärmenetzes ist.

9. Anlage nach einem der vorhergehenden Ansprüche, **dadurch gekennzeichnet, dass** die Wärmepumpe (2), das Dreiwegeventil (42) und die Umlaufpumpe (5) von einer Zentraleinheit (6) gesteuert werden.

## Claims

1. An installation (1) for heating and/or producing domestic hot water in a building, this installation being provided with a primary circuit (3) inside which a technical liquid circulates, such as water, and with a heat pump (2), the latter comprising a refrigerant circuit (20) on which are mounted in series, a first air/refrigerant heat exchanger (21), a compressor (22), a second refrigerant/technical liquid heat exchanger (23) and an expansion device (24) and this heat pump (2) being disposed outside the building so that its refrigerant circuit (20) is entirely outside the building, said primary circuit (3) passing through said second heat exchanger (23), a third technical liquid/medium to be heated heat exchanger (31) and a circulator (5), placed inside the building, being mounted on this primary circuit,
this installation being **characterized in that** said primary circuit (3) comprises a frost protection module (4), placed inside the building and which comprises a fourth technical liquid/air heat exchanger (41) and a three-way valve (42), the latter being disposed so that its first channel (421) is connected to the outlet (312) of the third exchanger, its second channel (422) is connected to a tapping point (36) on the pipe of the primary circuit connecting said second exchanger (23) to said third exchanger (31) and its third channel (423) is connected to the highest point (411) of said fourth exchanger (41), **in that** said fourth exchanger (41) is disposed lower than said second exchanger (23), and **in that** said three-way valve (42) can occupy either a first position, called "heating" position, in which its first channel (421) communicates exclusively with its third channel (423), so as to direct the technical liquid coming from the second exchanger (23) toward the third exchanger (31) and heat said medium to be heated, or a second position called "frost protection" position in which its second channel (422) communicates exclusively with its third channel (423), so that the technical liquid no longer circulates in the third exchanger (31), but circulates in a loop, by natural circulation, from the highest point (411) of the fourth exchanger (41) toward said second exchanger (23) then from said second exchanger (23) toward the lowest point (412) of the fourth exchanger.

2. The installation according to claim 1, **characterized in that** said fourth heat exchanger (41) is a vertical exchanger, preferably a finned tube exchanger.

3. The installation according to claim 1 or 2, **characterized in that** said circulator (5) is disposed between said fourth exchanger (41) and said second exchanger (23).

4. The installation according to claim 1 or 2, **characterized in that** said circulator (5) is disposed between said second exchanger (23) and said third exchanger (31).

5. The installation according to any of the preceding claims, **characterized in that** said frost protection module (4) is surrounded by a perforated casing (43), provided with at least one high opening (432) and at least one low opening (431), which allow the circulation of air in said casing, around the fourth heat exchanger (41), so as to carry out the heat exchange with the technical liquid.

6. The installation according to any of the preceding claims, **characterized in that** said three-way valve (42) is designed so that, in the event of an interruption of its power supply, it automatically switches to its "frost protection" position.

7. The installation according to any of the preceding claims, **characterized in that** said second exchanger (23) is surrounded by a shell (230) made of a thermally insulating material.

8. The installation according to any of the preceding claims, **characterized in that** said medium to be heated is either air located inside the building, or domestic hot water or water of a heating network.

9. The installation according to any of the preceding claims, **characterized in that** the heat pump (2), the three-way valve (42) and the circulator (5) are controlled by a central unit (6).
